# EUROPEAN PATENT APPLICATION

(11) **EP 1 835 280 A1**
(43) Date of publication of application: **19.09.2007**
(21) Application number: 05818656.0
(22) Date of filing: 13.12.2005
(51) Int. Cl.: G01N 27/00, B01D 1/00, B01D 11/00, G01N 25/00

(54) **HIGH THROUGHPUT METHOD AND SYSTEM FOR TREATING SEVERAL IONIC LIQUIDS**

(30) Priority: 13.12.2004 US 635905 P
(71) Applicant: Accelergy Shanghai R&D Center, Pudong, Shanghai (CN); Accelergy Corporation, Palo Alto, CA 94303 (US)
(72) Inventor: WANG, Youqi, Palo Alto, CA 94303 (US); LIU, Yumin, Palo Alto, CA 94303 (US)
(74) Representative: Williams, Richard Andrew Norman
(86) International application number: PCT/CN2005/002175
(87) International publication number: WO 2006/063514

(57) **Abstract**

The present invention provides a method and a system for processing a plurality of ILs, wherein the processing comprises one or more selected from the group of synthesis, separation, detection, purification, determination and so on, and the methods and systems for processing applies high throughput technique. By using the high throughput technique, the present invention has advantages like being capable of processing a plurality of ILs to attain large amount of experimental data in a short time, which provides great help for IL in large scale industrial and other aspects applications.

## Description

### FIELD OF THE INVENTION

The present invention relates to methods and systems for high throughput research of ionic liquids.

### BACKGROUND OF THE INVENTION

Ionic liquids (ILs), also known as molten salts, are salts that typically consist of ions and usually have a lower melting point. ILs exert no measurable vapor pressure at ambient temperature and therefore are nonvolatile. ILs may also be suitable solvents for many organic substances and thus are desirable for many chemical reactions. Due to their unique physical and chemical properties, ILs are potentially important in a wide range of industrial applications.

It has been estimated that the number of simple type of ILs, typically represented as A⁺B⁻, may be at least millions of such salts; biphasic ILs at least 10¹² ; and triphasic ILs at least 10¹⁸. Under conventional schemes of research, it seems practically impossible to synthesize and characterize all the possible ILs and identify their unique properties for potential applications.

High throughput research methods may shed light on the synthesis and characterization of ILs. For example, commercially available instruments, e.g., parallel microwave reactor, may be adaptable to high throughput synthesis of a variety of ILs. Lidström et al., Enhancement of combinatorial chemistry by microwave-assisted organic synthesis, Combinatorial Chemistry & High Throughput Screening 5: 441-458 (2002). One of the major bottlenecks for multiple IL synthesis is the product analysis of a plurality of synthesis reactions. Currently, newly synthesized ILs are typically analyzed by nuclear magnetic resonance (NMR). However, NMR detection is relatively slow and less accurate. For example, the NMR process may take longer than 10 minutes in order to obtain a satisfactory signal to noise ratio and is insensitive and inaccurate in quantification. Accordingly, NMR techniques may not be suitable method for high throughput detection and/or analysis of ILs.

In addition, there is no suitable methodology, technology, platform or workflow in the high throughput experimentation setting for analyzing IL products in IL synthesis reaction mixtures; purifying IL products from reaction mixtures or impurities; identifying ILs for their physical and chemical properties; and testing ILs for variety of potential applications thereof.

Therefore, it is desirable in the IL research field to develop qualitative and quantitative analysis for a plurality of ILs in high throughput capability. It is desirable to develop methods for monitoring in real-time and analyzing synthesis reactions in high throughput settings. It is desirable to develop methods for separating IL products from synthesis reactions, purifying IL products, and characterizing each IL in high throughput settings. Furthermore, it is desirable to develop methods for identifying the properties and testing for potential applications of each IL in high throughout platforms. Finally, it is desirable to develop a high throughput workflow to achieve the synthesis, separation, purification, characterization, and experimentation of a plurality of ILs for potential applications thereof.

### SUMMARY OF THE INVENTION

In order to overcome the limitations in the art, the present invention provides methods and systems for processing a plurality of ILs with high throughput technique, wherein the processing comprises one or more means of monitoring, detecting, separating, purifying, analyzing, handling. Further, the high throughput technique for processing a plurality of ILs represents processing at least two ILs in multiplexed or parallel mode.

Comparing to techniques in the art, the present invention has advantages like being capable of processing a plurality of ILs to attain large amount of experimental data and further improving efficiency.

One aspect of the present invention relates to high throughput methods and systems for real-time monitoring of a plurality of reactions for synthesizing ionic liquids (ILs). In one embodiment, a property (or properties) or a change of the property (or the properties) in on-going reactions is measured in real time to indicate the reaction progress, the presence of newly formed ionic liquids, and the amount thereof. A single property can be measured in a plurality of reactions. Multiple properties can be simultaneously measured in one reaction as well as a plurality of reactions.

Another aspect of the present invention relates to high throughput methods and systems for detecting and/or analyzing a plurality of IL synthesis reaction mixtures. In one embodiment, IL synthesis reaction mixtures are analyzed through capillary electrophoresis (CE). Capillary effluents from CE are detected and quantified through methods known in the art, such as ultra violet (UV), visible, and/or infrared light absorption or emission, conductivity measurement, and mass spectrometry. In a preferred embodiment, capillary electrophoresis can be multiplexed to analyze a plurality of IL synthesis reaction mixtures.

In another embodiment, IL synthesis reaction mixtures are analyzed through mass spectrometry (MS), which includes electro-magnetic sector MS, quadruple MS, ion cyclotron MS, and other types of MS known in the art. Sample introduction are implemented by electrospray, laser evaporation, ion sputtering, and other means that are familiar to the skill in the art. In another embodiment, IL synthesis reaction mixtures are sprayed to form charged droplets and/or particles in a controlled manner, and accelerated under an applied electric field to fly along a predefined path in a controlled atmosphere and detected by a detector (e.g., a Faraday cap). In another embodiment, an IL synthesis reaction mixture may include substances, such as IL, non-IL, major post-reaction products, minor post-reaction products, which can be detected or analyzed by methods according to the present invention. In a preferred embodiment, MS devices can be multiplexed to detect and/or analyze a plurality of ILs in a plurality of IL synthesis reaction mixtures.

Another aspect of the present invention relates to high throughput methods and systems for separating and/or purifying a plurality of ILs from a plurality of IL synthesis reaction mixtures. In one embodiment, a plurality of reaction mixtures, in their own containers respectively, are subjected to heat, vibration, and vacuum so that organic solvents and/or other volatile substance are removed. In another embodiment, a plurality of mixtures, in their own containers respectively, are subjected to filtration to remove solid residues, vacuum to remove volatile substance, and/or heat to reduce viscosity. In yet another embodiment, solvents are added to the reaction mixtures to dissolve and/or extract desired or unwanted substance; and centrifugation is applied for phase separation. In still another embodiment, solid or liquid chemicals (e.g., active carbon) are added to the reaction mixture or purified products to further remove a trace amount of impurities.

[Another aspect of the present invention relates to high throughput methods and systems for determining the properties of a plurality of newly synthesized and/or purified ILs. The properties include physical, chemical, biological, and environmental properties. In one embodiment, the physical properties of a plurality of ILs are determined. In another embodiment, the chemical properties of a plurality of ILs are determined. In another embodiment, the biological effects of a plurality of ILs are determined. Yet in another embodiment, the environment effects of a plurality of ILs are determined.

Another aspect of the present invention relates to high throughput methods and systems for characterizing a plurality of ILs in chemical or physical applications. In one embodiment, ILs are contacted with a substance or substances to determine whether ILs can be used as solvents for the substance(s). In one embodiment, ILs are placed into multiplexed or parallelized reactors with reactants and subject to various reaction conditions to determine whether ILs function as solvents and/or catalysts through analyzing resulting products of the reactions.

In another embodiment, each IL is contacted with a substance (e.g., solid, gas, liquid, gel, and slurries) to determine if the IL can be used as an extraction medium. In one embodiment, an IL is mixed thoroughly with a substance and the distribution function of at least one solute between the IL and the substance *(e.g.,* the amount of solute in IL and the substance) is measured directly. In another embodiment, the distribution function of at least one solute between the IL and the substance is measured kinetically to determine the thermodynamic equilibrium value or partition coefficient. In a preferred embodiment, lamellar flow in a micro electromechanical system (MEMS) can be used to contact an IL with a substance in a microanalytical and microfluidic setting. A plurality of MEMS can be multiplexed or parallelized to analyze a plurality of ILs.

Another aspect of the present invention relates to high throughput methods and systems for handling ILs. In one embodiment, a plurality of ILs are respectively contained in a plurality of temperature-controlled apparatus or containers to lower the viscosity of ILs as temperature rises. In another embodiment, ILs are dissolved in organic solvents in containers and the organic solvent can be removed through vacuum evaporation. In another embodiment, ILs mixed with organic liquids are separated through centrifugation and organic layers are removed through automated liquid handlers with needle tips containing conductivity sensors.

Another aspect of the present invention relates to high throughput workflows and systems for real-time monitoring, analyzing, separating, detecting, purifying, or characterizing a plurality of ILs. The workflows and systems comprise one or more methods and systems selected from the group consisting of high throughput methods and systems for real-time monitoring of a plurality of reactions for synthesizing ionic liquids; high throughput methods and systems for detecting and/or analyzing a plurality of ILs synthesis reaction mixtures; high throughput methods and systems for purifying a plurality of ILs from reaction mixtures; high throughput methods and systems for determining the properties of a plurality of newly synthesized and/or purified ILs; high throughput methods and systems for characterizing a plurality of ILs in chemical or physical applications; and any combination thereof.

### DETAILED DESCRIPTION OF THE INVENTION

Ionic liquids (ILs) are salts in liquid phase and typically consist of ions (cations and anions). The melting temperature (MT) for ILs has a wide range. Usually, the MTs for ILs are below 200°C and quite often below 100°C. Those ILs with a melting point at ambient temperature are called room temperature ILs (RTILs). RTILs strongly resemble ionic melts that may be produced by heating inorganic salts (e.g., sodium chloride) to high temperatures; and they are molten at much lower temperatures (e.g., room temperature).

The constituents of ionic liquids are constrained by high coulombic forces and thus exert practically no measurable vapor pressure above the liquid surface. It should be noted, however, that the decomposition products of ILs from extremely high temperatures may have measurable vapor pressures. The non-measurable or near-zero vapor pressure (non-volatile) property of ILs means that ILs do not emit the potentially hazardous, volatile organic compounds associated with many industrial solvents during their transportation, handling, and use. In addition, many ILs are non-explosive, non-oxidizing (nonflammable), highly polar, and coordinating. Furthermore, some ILs are immiscible with water, hydrocarbons, and a number of common organic solvents.

Given these unique properties, ILs present new and novel opportunities for use as solvents, catalytic reactions, separations, electrochemistry processes, and other applications. These properties may also contribute to the development of new reactions and processes that provide significant environmental safety and health benefits compared to existing chemical systems. Not surprisingly, there is an emerging worldwide scientific and commercial interest in ILs.

Typically, an IL may consist of 1) at least one organic cation and at least one inorganic anions; 2) at least one inorganic cation and at least one organic anion; 3) at least one organic cation and at least one organic anion; or 4) at least one inorganic cation and at least one inorganic anion. One example of ILs are salts that essentially consist of organic cations and inorganic anions. Well known examples of organic cations include 1-alkyl-3-methylimidazolium cations and N-alkylpyridinium cations. One IL consisting of one type of single cation and one type of single anion can be mixed with other ILs or salts (including inorganic salts) to form multi-component ILs. Currently, there are estimated to be hundreds of thousands of this single type of ILs capable of such combination to make multi-component ionic liquids, and the mount of multi-component ionic liquids is possibly over 10¹⁸. However, currently available methods and systems are not designed or suitable for analyzing and characterizing a large number of IL synthesis reactions or a large number of newly synthesized ILs. That is to say, for ILs research, there are no methods capable of simultaneously analyzing a plurality of ILs and attaining a plurality of results, namely methods for high throughput research of ILs. Further, there are no high throughput methods and systems for real-time monitoring and analyzing of a plurality of reactions for synthesizing ionic liquids; no high throughput methods and systems for separating a plurality of ILs from reaction mixtures; no high throughput methods and systems for purifying a plurality of ILs reaction products; no high throughput methods and systems for determining the properties of a plurality of newly synthesized and/or purified ILs; no high throughput methods and systems for characterizing a plurality of ILs in chemical or physical applications; finally, no high throughput methods and systems in integration of the above-mentioned functions of synthesizing, separating, purifying, determining, characterizing a plurity of ILs.

Accordingly, one aspect of the present invention is directed to methods and systems for processing a plurality of ILs with high throughput technique, wherein the processing step comprises one or more means of monitoring, detecting, separating, purifying, analyzing, determining, handling the ILs. Further, the processing step comprises monitoring synthesis reaction of a plurality of ILs, detecting and/or analyzing a plurality of IL synthesis reaction mixtures, purifying a plurality of ILs from a plurality of IL synthesis reaction mixtures, determining the properties of a plurality of newly synthesized and/or purified ILs, characterizing a plurality of ILs in chemical or physical applications.

All of the below embodiments for processing ILs in different aspect employ the high throughput method and system.

One aspect of the present invention is directed to workflows and systems in a high throughput setting to monitor, separate, purify, analyze, or characterize a plurality of ILs. The workflows and systems comprise at least one workflow and system selected from the group consisting of 1) a high throughput workflow and system for real-time monitoring of a plurality of reactions for synthesizing ILs and detecting the presence of newly synthesized or formed ILs; 2) a high throughput workflow and system for identifying and/or analyzing a plurality of IL synthesis reaction mixtures or newly formed ILs; 3) a high throughput workflow and system for purifying a plurality of newly synthesized ILs; 4) a high throughput workflow and system for detecting impurities in a plurality of newly synthesized and/or purified ILs; 5) a high throughput workflow and system for determining the properties of a plurality of newly synthesized and/or purified ILs; 6) a high throughput workflow and system for characterizing or identifying the roles of a plurality of ILs in chemical or physical applications; and 7) any combination of the above workflows and systems.

In one embodiment, the workflow (e.g., high throughput IL research workflow) includes monitoring, analyzing, and purifying a plurality of ILs, analyzing on minor products or by-products, determining the properties of ILs, identifying functions of ILs, analyzing on distribution coefficient of solute, analyzing on biological and environmental effects of ILs. For example, the monitoring step includes real-time monitoring of a plurality of IL synthesis reactions. The analyzing step includes the detection of ILs through mass spectrometry. The purifying step includes the purification of ILs from reaction mixtures through, for example, vacuum evaporation. The analyzing step on minor products or by-products includes the analysis of minor products or by-products in the IL synthesis reactions and impurities in purified ILs. The determining the properties step includes the determination of the properties (e.g., physical, chemical, biological, and environmental properties) of multiple newly synthesized and separated ILs. The identifying functions of ILs step includes the identification of ILs' role in chemical reactions by using ILs as catalysts or reaction solvents, wherein the chemical reactions include reactors and reaction control, real-time monitoring, product and/or byproduct analysis, product separation and/or purification, product impurities analysis. The analysis on distribution coefficient of solute includes the analysis of distribution coefficient of at least one solute between an IL and a substance through mixing/extraction processes. The analysis on environmental effects includes the analysis of environmental effects of ILs regarding issues including IL disposal, waste treatment, toxicity and safety. The high throughput technique is applied to process a plurality of ILs in the above mentioned workflow.

Another aspect of the present invention relates to high throughput methods and systems for real-time monitoring of a plurality of reactions for synthesizing ionic liquids. Accordingly, the reaction progress (*e.g.,* the onset of synthesis reactions, the presence of ILs, and the quantitative amount of ILs in the reactions) can be monitored without interrupting the reactions. In one embodiment, reactions are monitored *in situ* so that reaction samples are not required to be taken out from reactors.

In one embodiment, a real-time monitoring process detects certain physical and/or chemical property changes during a reaction and measures one or more changes of properties in the reaction as indications for the reaction progress, preferably without disturbing the reactions and/or removal of sample materials from reactor. The term "a reaction" herein refers to an IL synthesis process wherein reactants are placed together to synthesize one or more ILs or a process wherein the use of ILs as solvents and/or catalysts is determined.

The properties suitable for real-time monitoring of IL synthesis reactions include, but are not limited to, color change including UV, visible, and infra-red spectrum, phase change (e.g., solid reactants dissolved into liquid phase, or solid products precipitated from liquid phase), light scattering, light absorption, light emission, paramagnetism to magnetism, diamagnetism to magnetism, opacity, viscosity, density, conductivity (ionic, electrical and thermal), vapor pressure, surface tension, heat capacity, coefficient of thermal expansion, empirical solvent parameters, absorption, hardness, acidity (e.g., Lewis, and Flanklin acidity), electromotive force, dielectric constant, dipole moment, refractive index, luster, malleability, hydrophobicity, piezoelectricity, and electrostrictivity. In a preferred embodiment, the properties suitable for real-time monitoring include, but are not limited to, color change, phase change, viscosity, conductivity (ionic or electrical), vapor pressure, surface tension, acidity, light absorption, light emission, and/or light scattering. The above mentioned application will be illustrated in more detailed below.

For example, IL synthesis reactions may result in a vibrational band shift, which can be monitored spectroscopically using infrared and Raman probes. Similarly, the synthesis of ILs may result in changes in viscosity and/or conductivity. The changes in viscosity can be measured through viscosity probes (e.g., viscometer) placed in reactors. The changes in conductivity can be measured through conductivity probes. The probes measuring the properties of reactions can be multiplexed or parallelized by placing each probe into each reactor, wherein all reactors are multiplexed or arrayed. As a result, the probes simultaneously measure one property in a plurality of IL synthesis reactions occurring in the reactors. By the same token, multiple properties can be monitored simultaneously in a single reactor by placing a cluster of corresponding probes in the reactor. Accordingly, a plurality of properties in multiple reactions occurring in multiple reactors can be monitored simultaneously be placing a cluster of probes into each reactor.

In another example, IL reaction process can also be monitored through colorimetric detection. For example, due to the coordination natures and basicity of imidazole, pyridine, and amine, nitrogen (N) containing precursors for ionic liquid synthesis, residual of those N containing precursors can be detected and monitored by conventional colorimetric detection methods. During IL synthesis reactions, those N containing reactants may react with certain metal complexes resulting in a color change in the end products. As a result, the detection of non-reacted N containing reactants indicates the incompleteness of the reaction and the remaining amount of the reactants. The colorimetric detection can be readily multiplexed and adapted with multiplexed or parallelized IL synthesis reactors.

In another example, the reaction-based colorimetric detection can also be used in detecting residual chloride during ion exchange reaction for ionic liquid synthesis with other anions. In this instance, reaction mixtures may be withdrawn from reactors and applied to silver nitrate containing apparatus/arrays. If mixtures contain un-exchanged halides, Ag halides precipitation will be formed and detected by colorimetric detection. The presence of precipitation indicates the incompleteness of ion exchange reaction.

In another example, the pressure of reactions for ionic liquid synthesis can be monitored in real time in fix volume reactors/reactions. Since reactants prior to IL synthesis may have vapor pressure and the ending IL products have no measurable vapor pressure, the pressure of the reactions in reactors may decline and reach an equilibrium pressure when the reaction is completed. Accordingly, the monitoring and detection of declining reaction pressure may indicate the onset of the synthesis of ILs, the amount of ILs formed, and the completion of the synthesis. The pressure detectors can also be multiplexed to measure the reaction pressure in multiplexed or parallelized reactors. Similarly, the feed gas consumption rate of reactions for ionic liquid synthesis can be monitored in real time for constant pressure type of reactors/reactions. Since reactants in gas phase may be consumed during reaction, the consumption of gas reactants commences when the reaction starts and the consumption stops when the reaction completes. Accordingly, any change in the feed gas consumption may indicate the onset of the synthesis of ILs, the amount of ILs formed, and the completion of the synthesis. The feed gas consumption can be readily monitored or measured by a flow meter, which can be multiplexed for monitoring a plurality of reactions.

As a result, real-time monitoring of a plurality of reaction processes for synthesizing a plurality of ILs can provide useful information about the progress of reactions, the onset of the synthesis of ILs, certain properties of newly synthesized ILs, quantitative amount of ILs, and the completion of the synthesis in multiplexed IL synthesis reactions. The real-time monitoring processes can also be employed in a plurality of reactions where newly synthesized or purified ILs are used as solvents, reactants for the reactions, and are not limited to the ionic liquid synthesis reaction.

Another aspect of the present invention is direct to high throughput methods and systems for detecting and/or analyzing a plurality of IL synthesis reaction mixtures or newly synthesized IL(s) in a plurality of IL synthesis reactions. An IL synthesis reaction mixture may include a number of constituents, such as IL, non-IL, major post-reaction products, minor post-reaction products. These constituents may be detected and analyzed by subjecting the IL synthesis reaction mixtures to mass spectrometry (MS) equipment for detection and analysis. The MS equipment suitable for the detection and analysis includes, but are not limited to, electro-magnetic sector MS, quadruple MS, ion cyclotron MS, and other types of MS known in the art. Sample introduction is implemented by electrospray, laser evaporation, ion sputtering, and other means that are known in the art. For example, IL synthesis reaction mixtures are sprayed to form charged droplets and/or particles in a controlled manner, and accelerated under an applied electric field to fly along a predefined path in a controlled atmosphere and detected by a detector (e.g., a Faraday cap).

When MS devices are employed, the total detection time is typically less than a few minutes, in some techniques, less than a few seconds, and in some other techniques, less than a few milliseconds, as far as the time is sufficient to generate a complete mass spectrum with good signal to noise ratio. In the negative ion mode, MS can be used to detect anionic components or constituents. In the positive mode, MS can be used to detect cationic components or constituents. With proper control of spray-ionization conditions, or ablation conditions, or ionization conditions, or acceleration & gating conditions, knowledge about amount of assisting solvent(s), attention to specific mass windows, proper and suitable internal standards, and proper calibration procedures, MS can become a quantification tool to determine the concentrations of the major and minor products in reaction samples. Since the detection time in MS is typically less than a few minutes, significantly less than the time requirement in NMR, MS provides high throughput solution to detect and analyze hundreds to thousands of IL synthesis reactions per day. In addition, a plurality of MS devices can be readily designed or multiplexed in a parallel or array pattern to detect a plurality of IL reaction samples from a plurality of reactors (e.g., multiplex or arrayed reactors).

Another aspect of the present invention is directed to high throughput methods and systems for detecting and/or analyzing reaction mixtures in a plurality of IL synthesis reaction mixtures using separation-detection techniques. Conventional separation-detection techniques include gas chromatography (GC), liquid chromatography (LC), and ion chromatography (IC). Although GC, LC and IC may be multiplexed in high throughput experimentation, these techniques are not easily applied to analyzing a plurality of ILs. For example, GC and LC are slow for high throughput applications and may not be suitable for analyzing ionic liquids due to ILs' lack of vapor pressure and/or their ionic nature. IC is also a slow process, requires a large amount of samples, and is difficult to be cleaned after separation.

Capillary electrophoresis (CE), however, can be used for the separation of cations and neutrals in ionic liquids mixture. In particular, since non-aqueous phase CE is applied to separate compounds that are water-insoluble, it can be used to separate those ionic liquids that are immiscible to water. The solvent (running buffer) in non-aqueous phase CE may include, but are not limited to, methanol or acetonitrile or the combination of both.

The CE-separated ILs or other substances (e.g., by-products, excess reactants, impurities) in IL synthesis reaction mixtures can be detected using conventional detection methods, such as ultraviolet (UV) light absorption or emission. If ILs or other substances in reaction mixtures lack UV absorption, a running buffer with constant UV light absorption or emission can be used and a measurable decrease from background absorption or emission indicates the presence of the ILs or other substances. Additionally, the CE-separated ILs or other substances can also be detected using any detection methods known to the art or as described in the present invention (e.g., mass spectrometry).

The advantages of CE, in comparison to GC or LC, include CE's easiness for parallelization or multiplex, short time for separation and minimal requirement for sample amount or volume. A plurality of CEs can be easily multiplexed or arrayed to contain hundreds or thousands of channels for separation and detection. Accordingly, hundreds or thousands of IL separations and detections can be performed simultaneously by a parallel CE system in a very short period of time.

Another aspect of the present invention relates to high throughput methods and systems for separating and/or purifying a plurality of ILs from a plurality of IL synthesis reaction mixtures. In one embodiment, a plurality of reaction mixtures, each in their own containers, are subjected to heat, vibration, and vacuum so that organic solvents and/or other volatile substance are removed. As a result, ILs are separated and purified. In another embodiment, a plurality of mixtures, each in their own containers, are subjected to filtration to remove solid residues, heat and/or vibration and/or vacuum to remove volatile substance, and/or heat to reduce viscosity of the remaining purified ILs in the containers. In yet another embodiment, solvents which can form an interface with ILs are added to the reaction mixtures to dissolve and/or extract desired or unwanted substance; and centrifugation is applied for phase separation. In still another embodiment, certain solid or liquid chemicals (e.g., active carbon) are added to the reaction mixture or purified ILs to further remove a trace amount of impurities.

Another aspect of the present invention relates to high throughput methods and systems for determining the properties of a plurality of newly synthesized and/or purified ILs. The properties of an IL include, but are not limited to, color, freezing point, boiling point, melting point, decomposition temperature, paramagnetism, diamagnetism, opacity, viscosity, density, conductivity (ionic, electrical and thermal), vapor pressure, surface tension, heat capacity, coefficient of thermal expansion, thermal stability, glass transition temperature, empirical solvent parameters, absorption, hardness, acidity (e.g., Lewis, and Flanklin acidity), toxicity, biological effect, environmental effect, electromotive force, electrochemical window, dielectric constant, dipole moment, refractive index, luster, malleability, hydrophobicity, ductility, piezoelectricity, electrostrictivity, solubility to variety of chemicals and solvents, miscibility to variety of matters (e.g., water and air).

In a preferred embodiment, the properties of an IL include, but are not limited to, color, melting point, decomposition temperature, viscosity, density, conductivity (ionic, electrical and thermal), glass transition temperature, empirical solvent parameters, toxicity, surface tension, heat capacity, coefficient of thermal expansion, toxicity, biological effect, environmental effect, and acidity.

As known in the art, conventional methods for measuring melting point of ILs are usually based on a correlation diagram of temperature and heat flux to determine the transition point. Methods suitable for measuring melting point for ILs include differential scanning calorimeter (DSC) and cold-stage polarizing microscopy. Similarly, decomposition temperature can be measured by, for example, thermal gravimetric analysis. Heat capacity can be measured by, for example, DSC. Thermal conductivity can be measured by, for example, the transient hot wired method. Thermal expansivity can be measured by, for example, the thermal shock method. Density can be measured gravimetrically. Viscosity can be measured by, for example, viscometer. Surface tension can be measured by, for example, capillary action, a bubble pressure analyzer, a drop shape analyzer, the DuNouy ring method, or a tensiometer. The above mentioned methods just are examples for measuring these properties for ILs, and other known methods also can be suitable.

In one embodiment of measuring melting temperature, a plurality of IL samples are placed on a plate and the plate is placed in a temperature controlled enclosure with optionally controlled atmosphere. A camera is adapted to take series of pictures of or continuously monitor the plate while the plate temperature rises. The phase, shape and/or morphologic change of the samples on the plate is captured by the camera and used as an indicator for the arrival of the melting temperature. Consequently, melting temperatures of a plurality of samples are obtained in a high throughput setting. In another embodiment, laser or LED light are used to enhance camera sensitivity in capture melting or other phase change activities of the samples. The light can be parallel distributed or cast rapidly across samples on the plate. The light can also be projected on samples on the plate through a Digital Light Processor (DLP) based micromirror array (Texas Instrument, USA, www.ti.com). Plates used herein include micro titer plates, plates with wells, plates with multiple wells, and plates of transparent nature or with special optical features or properties. The IL samples deposited on the surface of a plate can be observed, when light is projected to them through DLP.

In one embodiment for measuring decomposition temperature, a sniffer is connected to a sensor device or detection system (e.g., MS), and one or more separated IL samples are placed on a plate. The plate with samples is heated by, for example, a heat element or a laser light, and the plate temperature is monitored and recorded. Since ILs have practically no detectable vapor pressure while their decomposition products do, the presence or onset of gaseous species emitted from the IL sample at a corresponding temperature indicates that the corresponding temperature is the decomposition temperature for the IL sample. Upon the emission, the gaseous species can be analyzed for information about the decomposition products. In a preferred embodiment, a plate with samples is placed in a vacuum environment. In another embodiment, a MS detector or device can be placed directly at the proximity to a sample without sniffer or only with a skimmer. This setting significantly increases the sensitivity and reduces response time, hence improves both detection quality and speed.

It is further contemplated that once IL samples are placed on a plate, the melting temperatures of samples can be measured first and the decomposition temperatures measured subsequently on the same plate. In other words, a plate containing a plurality of samples is subject to melting point measurement first and then decomposition temperature measurement in accordance with methods provided herein.

In an example of measuring viscosity, the two ends (an inlet and a outlet) of a reaction container are connected or exposed two pressure controlled regions (an inlet region that is connected to the inlet and a outlet region that is connected to the outlet), wherein the reaction container and two regions are all in the same temperature-controlled environment. In a preferred embodiment, the reaction container is pre-wetted with the IL to be measured. An IL sample is loaded at the inlet of the reaction container while the pressure difference of the two regions is not measurable prior to the viscosity measurement. When a pressure begins to be applied in the inlet region, the IL sample starts to flow through the reaction container from the inlet to the outlet. The time and length of the IL movement are continuously monitored and recorded by a camera. The viscosity of the IL sample is obtained through the analysis of the series of the images taken. By varying the pressure difference between the inlet region and the out region, a wide range of viscosity can be measured. By varying the temperature environment, the temperature dependency of viscosity can be measured. In a preferred embodiment, reaction container is tubing generally laid horizontally. It is contemplated that tubing and pressure regions can be multiplexed so that the viscosity of a plurality of IL samples can be measured simultaneously.

In an example of measuring density, accurately metered small amount ILs is dropped into a column of immiscible and transparent liquid having lower density than the IL samples to be measured. A camera, preferably with high resolution, monitors and records the images of the IL droplet formed and its downward movement in the column. From the image analysis, the size, shape, and moving velocity and acceleration can be obtained and the density calculated, if viscosity is known. Alternatively, viscosity can be obtained if density is known. With controlled temperature environment, the temperature dependency of density can be obtained.

In one embodiment, the biological effects of an IL may be measured by, for example, contacting the IL with biological sample(s) and determining the biological effects. The biological samples include biological molecules (e.g., proteins and nucleic acids), virus, cells (prokaryotic and eukaryotic cells), tissues, organs, and subjects (e.g., plants or animals or humans). The biological effects include, for example, toxicity, effects (reduction or enhancement) on microbial infection, effects (reduction or enhancement) on viral infection, impact on cell differentiation, proliferation or apoptosis, mutagenesis, carcinogenesis, impact on gene expression (e.g., gene duplication, gene transcription, translation, post-translational modification), impact on intracellular signal transduction or intercellular signaling, interaction with other biological or chemical molecules in biological samples (e.g., interaction with DNA, RNA, protein, other agonist or antagonists), and therapeutic effects on diseases (e.g., the ability of treating a disease). The biological effect can be measured using methods commonly known to skilled artisans in life sciences. By using the high throughput technique, large amount of experimental results can be attained in a short time.

In one embodiment, an IL sample is contacted with biological samples *in vitro.* For example, an IL sample can be treated with cultured cells or tissues. In another embodiment, an IL samples is contacted with biological samples *in vivo.* For example, an IL sample in administered into a tissue or a subject through, for example, injection, absorption, oral administration. The subjects include plants, animals and humans. The tissue includes, for example, the heart, the liver, the spleen, the lung, the intestine, the kidney, the brain, the bone, the blood vessel. *In in vivo* administration *or in vitro* contact, an IL can be applied by itself alone or with other pharmaceutical molecule(s) or carrier(s). By using the high throughput technique, large amount of experimental results can be attained in a short time.

In an example of measuring the environmental effect of an IL sample, the biological effects (e.g., toxicity) for an IL sample is first determined. The effects of an IL sample on water, air, and soil are further determined. Upon the determination, an IL from a reaction can be removed from the reaction through, e.g., extraction or chemical reactions that change the IL into a hazard-free substance.

It is contemplated that the aforementioned methods for determining the properties of ILs can be multiplexed or parallelized so that a plurality of IL synthesis reaction mixtures or a plurality of newly synthesized and/or purified ILs can be measured simultaneously or in fast serial manner. For example, equipment or probes measuring the properties of ILs can be multiplexed or parallelized. For another example, in the biological effect study, a plurality of ILs can be contacted with tissue arrays, cell arrays, protein arrays, and DNA arrays. These arrays are well known in the art of life sciences. In addition, a plurality of ILs can also be contacted with or administered to animal arrays where animals are placed in arrayed or multiplexed cages.

Another aspect of the present invention is directed to high throughput methods and systems for characterizing a plurality of ILs in chemical or physical applications. For example, it is desirable to determine whether newly synthesized and/or purified ILs can be used as solvents and/or catalysts in chemical reactions, media for extraction, lubricants, and coolants for heat dissipation. In one example, a plurality of ILs are placed into multiplexed or parallelized reactors in a high throughput setting in the presence of substances (e.g., in solid phase). The dissolution of the substances in the ILs indicates that the ILs may be solvents for the substances. In another example, a plurality of ILs are fed into multiplexed reactors containing reactants for chemical reactions. Reaction mixtures are analyzed to determine whether ILs function as solvents and/or catalysts for the reactions.

In another example, the role of ILs as extraction media in the mixing/extraction process can be determined. Each IL is contacted with a substance (solid, gas, liquid, gel, liquid/solid suspension, slurry) and the distribution behavior for at least one solute between the IL and the substance is determined. The solute is contained either in the IL or the substance or in both. In particular, the amount of the solute in IL and the amount in the substance are measured at or near thermodynamic equilibrium, thus the partition coefficient for the solute between the IL and the substance can be obtained directly. With various temperature settings for the equilibrium status, the partition function can also be obtained directly.

Alternatively, the distribution function and/or distribution profile of a solute in an IL and a substance is monitored in real-time, and the partition coefficient for a specific temperature is calculated indirectly. The partition function is obtained by changing temperature settings. In one embodiment, the contact time and/or other contact parameters, such as contact area, between IL and the substance is controlled and varied in controlled fashion. The distribution of the solute between the IL and the substance is then measured. Consequently, the partition coefficient for the solute between the IL and the substance is calculated. It is further contemplated that coefficient for at least one solute between two ILs, or among more than two ILs, or among ILs and substances can be determined accordingly.

In determining the role of an IL in an extraction process (e.g., the partition coefficient of a solute), the IL are usually required to mix with a substance (or substances) thoroughly to achieve a high surface-to-volume ratio. An IL and a substance (or substances) can be mixed through conventional mixing methods, such as mechanical and/or magnetic stirring in a stirring reactor. In a preferred embodiment, a stirring reactor is temperature-controlled so that stirring occurs at a desired, constant temperature. An IL and a substance (or substances) can also be mixed though a high shear force process which are based on principles similar to the spinning tube-in-tube system (See the STT System, www.kreido.com). In an example of the high shear force process, an IL and a substance (or substances) are fed from inlets into an annular zone between a stator and a spinning rotor (e.g., the rotor/stator assembly) and quickly mixed with each other through high shear forces. The mixture transits to the other end (the outlet) of the assembly and is collected. In a preferred embodiment, the assembly is temperature-controlled by surrounding the stator with heat elements or exchangers. Once a mixture is obtained, the IL and the substance can be separated through, e.g., centrifugation, and the amount of a solute in the IL and the substance can be measured to determine the distribution of the solute.

Conventional stirring reactors or stator/rotor assembly are designed to mix a large quantities of materials and may not be suitable for small mixing volume (e.g., less than 100ml), much less multiplexing. Therefore, it is contemplated that conventional stirring reactor or the stator/rotor assembly are miniaturized to mix an IL and substance(s) with volume less than 100ml (preferably less than 10 ml, more preferably less than 1 ml). It is further contemplated that miniaturized mixing reactors are multiplexed to determine the role of a plurality of ILs in extraction. In addition, it is contemplated that automatic IL liquid handlers and automatic liquid collectors are used in connection with stirring reactors or the stator/rotor assembly.

The distribution function of a solute (or solutes) can be determined without thorough mixing of an IL and substance(s). For example, multiple-phase laminar flow in a micro channel (e.g., electromechanical system (MEMS) technologies) can be used to determine the distribution function of at least one solute between at least one IL and at least one substance without thoroughly mixing the IL and the substance. MEMS have been used for microfabrication inside capillaries. Kenis et al., Microfabrication inside capillaries using multiphase laminar flow patterning, Science 285: 83-85 (1999). Under a laminar flow condition, two or more substances, miscible or immiscible, can flow through a single channel without mixing with each others and have definite interfaces separating each others. Thus, a micro channel device provides a well defined and controlled contact area among the substances. By controlling the feeding rate of the substances, the contact times among substances are controlled. By analyzing the solute distribution of the effluents with various flow parameter setting, contact time setting, and temperature setting, the distribution function of the solute between the IL and the substances can be calculated.

In a preferred embodiment, one IL phase is brought together with at least one other substance phase (e.g., solid, liquid, gas, suspension, gel, slurry) though a junction in a microfluidic system. Two phases will contact each other and allow a solute to diffuse from the substance into the IL phase or *vice versa.* At the outlet of the flows, the amounts of solute in IL and in the substance are measured. Various measurements can be taken at various laminar flow rate, flow time, or temperature to constitute a kinetic diagram of the distribution of the solute between the IL phase and the substance phase. Based on the kinetic diagram, the thermodynamic equilibrium property, i.e., the distribution function of the solute between the IL and the substance can be predicated or calculated. The substance may be miscible or immiscible to an IL. The solute can be contained in a substance or an IL or both.

It is also contemplated that multiple phases of ILs and substances (e.g., at least one IL and at least one substance, one IL and least one other IL, containing at least one solute) can be introduced into the MEMS device. It is further contemplated that MEMS can be multiplexed or parallelized to identify the mixing/extraction characteristics of a plurality ofILs.

Another aspect of the present invention is directed to high throughput methods and systems for handling or containing ILs. In high throughput ionic liquid research, automatic liquid handlers may be used to handle ionic liquids. Since some ILs have high viscosity, automatic liquid handlers can also be modified with a temperature-controlled apparatus (e.g., heating element) to reduce the viscosity of ILs. Accordingly, in one example, ILs are contained in a heated apparatus or container to lower the viscosity of ILs.

In another example, ILs are dissolved in organic solvents and the IL organic solution can be used and handled by automated liquid handlers. The organic solution in the automatic liquid handlers can be removed by parallel vacuum evaporation.

In another example, in separating an organic phase from ILs for parallel high throughput applications, samples which contains the mixed phases of the organic phase and ILs can be spun by centrifugation equipment which can hold arrayed or multiplexed samples. After the conclusion of centrifugation, an automated liquid handler with a needle tip equipped with a conductivity sensor can be used to withdraw the organic layer or the IL layer and dispense into a separate container. The conductivity sensor can sense the needle's contact with the interface between the organic layer and IL the layer due to a conductivity difference between two phases. The liquid handler's needle will be washed at elevated temperature with multiple organic solvents or water and dried for subsequent usage.

## Claims

1. A method for processing a plurality of ILs, wherein said ILs are processed with a high throughput technique.

2. The method of claim 1, wherein said processing includes one or more means selected from the group consisting of monitoring, detecting, separating, purifying, analyzing, determining, and handling said ILs.

3. The method of claim 1, wherein said processing step includes one or more means selected from the group consisting of monitoring a plurality of reactions for synthesizing ILs, detecting and/or analyzing a plurality of IL synthesis reaction mixtures, purifying a plurality of ILs from a plurality of IL synthesis reaction mixtures, determining the properties of a plurality of newly synthesized and/or purified ILs, and characterizing a plurality of said newly synthesized and/or purified ILs in chemical or physical applications or biological effects.

4. The method of claim 2 or claim 3, wherein said monitoring step is real-time monitoring of a plurality of reactions for synthesizing said ILs.

5. The method of claim 4, wherein the properties being real-time monitored for IL synthesis reactions comprise at least one property selected from the group consisting of color change, phase change, light scattering, light absorption, light emission, paramagnetism to magnetism, diamagnetism to magnetism, opacity, viscosity, density, conductivity, vapor pressure, surface tension, heat capacity, coefficient of thermal expansion, empirical solvent parameters, absorption, hardness, acidity, electromotive force, dielectric constant, dipole moment, refractive index, luster, malleability, hydrophobicity, vibration spectrum, piezoelectricity, and electrostrictivity, in which said color change includes the change of ultraviolet spectrum, the change of visible spectrum, and the change of infrared spectrum.

6. The method of claim 2 or claim 3, wherein an instrument is used in the analyzing step and said instrument includes a mass spectrometer.

7. The method of claim 2 or claim 3, wherein said purifying and said separating said ILs comprise one or more steps selected from the group consisting of filtration, heating, vibration, handling under vacuum, centrifugation separation, and extraction.

8. The method of claim 2 or claim 3, wherein the properties being determined for said newly synthesized and/or purified ILs comprise at least one selected from the group consisting of color, freezing point, boiling point, melting point, decomposition temperature, paramagnetism, diamagnetism, opacity, viscosity, density, conductivity, vapor pressure, surface tension, heat capacity, coefficient of thermal expansion, thermal stability, glass transition temperature, empirical solvent parameters, absorption, hardness, acidity, toxicity, biological effect, environmental effect, electromotive force, electrochemical window, dielectric constant, dipole moment, refractive index, luster, malleability, hydrophobicity, ductility, piezoelectricity, electrostrictivity, solubility to variety of chemicals and solvents, and miscibility to variety of matters.

9. The method of claim 2 or claim 3, wherein said biological effect is determined by contacting ILs with biological samples, in which said biological samples include biological molecules, virus, cells, tissues, organs and subjects, said biological effects include toxicity, effects on microbial infection, effects on viral infection, impact on cell differentiation, proliferation or apoptosis, mutagenesis, carcinogenesis, impact on gene expression, impact on intracellular signal transduction or intercellular signaling, interaction with other biological or chemical molecules in said biological samples, and therapeutic effects on diseases.

10. A system for processing a plurality of ILs, wherein said system is a high throughput technical system.

11. The system of claim 10, wherein said system comprises at least one system selected from the group consisting of
1) a high throughput monitoring system for real-time monitoring of a plurality of reactions for synthesizing ILs and for detecting the presence of newly synthesized ILs;
2) a high throughput analyzing system for identifying and/or analyzing a plurality of ILs synthesis reaction mixtures or newly synthesized ILs;
3) a high throughput purifying system for purifying newly synthesized ILs;
4) a high throughput detecting system for detecting the impurities in the newly synthesized ILs or purified ILs;
5) a high throughput determining system for determining the properties of the newly synthesized ILs or purified ILs;
6) a high throughput characterizing system for characterizing the roles of a plurality of ILs in chemical or physical applications; and
7) any combination of the above systems.
